# EUROPEAN PATENT SPECIFICATION

(11) **EP 4 194 710 B1**
(45) Date of publication and mention of the grant of the patent: **22.01.2025**
(21) Application number: 21853071.5
(22) Date of filing: 29.07.2021
(51) Int. Cl.: F16D 13/52, F16D 43/10, F16D 13/64, F16D 13/56, F16D 23/12

(54) **POWER TRANSMISSION DEVICE**
KRAFTÜBERTRAGUNGSVORRICHTUNG
DISPOSITIF DE TRANSMISSION DE PUISSANCE

(30) Priority: 06.08.2020 JP 2020134039
(43) Date of publication of application: 14.06.2023
(73) Proprietor: Kabushiki Kaisha F.C.C., Hamamatsu-shi, Shizuoka 431-1394 (JP)
(72) Inventor: OZAWA, Yoshihiko, Hamamatsu-shi, Shizuoka 431-1304 (JP); CHEN, Han Hiong, Hamamatsu-shi, Shizuoka 431-1304 (JP); YOSHIMOTO, Katsu, Hamamatsu-shi, Shizuoka 431-1304 (JP)
(74) Representative: Grünecker Patent- und Rechtsanwälte PartG mbB
(86) International application number: PCT/JP2021/028050
(87) International publication number: WO 2022/030350

(56) References cited:
- EP-A1- 3 677 805
- WO-A1-2020/116508
- JP-A- 2005 220 929
- JP-A- 2009 063 023
- JP-A- 2017 155 883
- JP-A- 2019 044 870

## Description

### TECHNICAL FIELD

The present invention relates to a power transmission apparatus that is able to freely transmit a rotational force of an input member to an output member or cut off the rotational force.

### BACKGROUND ART

Usually, a power transmission apparatus included in a motorcycle freely transmits a driving force of an engine to a transmission and a driving wheel or cuts off the driving force. Such a power transmission apparatus includes: an input member connected to an engine; an output member connected to a transmission and a driving wheel; a clutch member connected to the output member; and a pressure member that is able to move toward or away from the clutch member. Moving the pressure member toward the clutch member presses driving and driven clutch plates against each other so as to transmit power therebetween. Moving the pressure member away from the clutch member releases a pressing force exerted on the driving and driven clutch plates so as to cut off transmission of the power therebetween.

As disclosed, for example, in Patent Literature 1, a power transmission apparatus known in the art includes a back torque transmission cam that is able to, when a pressure member is located at a non-operating position, move a second clutch member so as to press driving and driven clutch plates against each other upon reception of a rotational force by a first clutch member through an output member. The power transmission apparatus known in the art is able to transmit a rotational force of a wheel to an engine so as to apply an engine brake.

### CITATION LIST

### PATENT LITERATURE

Patent Literature 1: JP 2019-44870 A

Document EP 3 677 805 A1 discloses a power transmission apparatus comprising a clutch housing that is rotatable together with an input member that is rotatable by a drive force of an engine of a vehicle, a plurality of driving clutch plates being attached to the clutch housing; a clutch member coupled to an output member that can rotate a wheel of the vehicle, a plurality of driven clutch plates formed alternately with the driving clutch plates of the clutch housing being attached to the clutch member; a pressure member that is movable between an actuation position, at which the drive force of the engine can be transmitted to the wheel with the driving clutch plates and the driven clutch plates brought into press contact with each other, and a non-actuation position, at which transmission of the drive force of the engine to the wheel can be blocked by releasing a press-contact force between the driving clutch plates and the driven clutch plates; a weight member disposed in a groove portion provided in the clutch housing to extend in a radial direction, the weight member being movable from a radially inner position to a radially outer position of the groove portion by a centrifugal force due to rotation of the clutch housing; and an interlocking member that can move the pressure member from the non-actuation position to the actuation position as the weight member is moved from the radially inner position to the radially outer position. The clutch member includes a first clutch member coupled to the output member, a second clutch member to which the driven clutch plates are attached, and a back torque transmission cam that can bring the driving clutch plates and the driven clutch plates into press contact with each other by moving the second clutch member when the pressure member is located at the non-actuation position and a rotational force is input to the first clutch member via the output member, and a torque transmission portion formed on each of the first clutch member and the second clutch member to be able to transmit a rotational force transmitted to the second clutch member to the first clutch member not via the back torque transmission cam.

Document WO 2020/116 508 A1 discloses power transmission device including a clutch housing that rotates together with an input member that is rotated by driving power of an engine of a vehicle and to which a plurality of drive-side clutch plates are attached; a clutch member to which a plurality of driven-side clutch plates that are formed alternately with the drive-side clutch plates of the clutch housing are attached and that is coupled to an output member that is capable of rotating a wheel of the vehicle; a pressure member that is movable between an active position at which the pressure member presses the drive-side clutch plates and the driven-side clutch plates against each other to be able to transmit the driving power of the engine to the wheel and an inactive position at which the pressure member releases a press-contact force between the drive-side clutch plates and the driven-side clutch plates to be able to stop transmitting the driving power of the engine to the wheel; a weight member that is disposed in a groove portion extending in a radial direction of the clutch housing and that is movable from a radially-inner position to a radially-outer position in the groove portion due to a centrifugal force that is generated as the clutch housing rotates; an interlocking member that is capable of moving the pressure member from the inactive position to the active position as the weight member moves from the radially-inner position to the radially-outer position; and an activation member that is capable of moving the pressure member in a direction such that a press-contact force between the drive-side clutch plates and the driven-side clutch plates is enabled to be released. The pressure member includes a first pressure member that is capable of moving in a direction such that the first pressure member presses the drive-side clutch plates and the driven-side clutch plates against each other by receiving a pressing force of the interlocking member, a second pressure member that is capable of moving in a direction such that the second pressure member releases a press-contact force between the drive-side clutch plates and the driven-side clutch plates by receiving an activation force of the activation member, and a back-torque transmitting cam that moves the second pressure member relative to the first pressure member to keep pressing the drive-side clutch plates and the driven-side clutch plates against each other when a rotational force is input to the clutch member via the output member in a process in which the weight member moves from the radially-outer position to the radially-inner position and the first pressure member moves to follow the interlocking member.

### SUMMARY OF INVENTION

### TECHNICAL PROBLEM

The power transmission apparatus known in the art, however, has a low degree of flexibility in setting the angles of cam surfaces that define the back torque transmission cam. This unfortunately makes it difficult to freely change transmission capacity during application of an engine brake. In one example, the number of driving clutch plates and the number of driven clutch plates may be changed so as to freely change transmission capacity during application of an engine brake. This, however, results in an undesirable change in transmission capacity during acceleration.

The present invention has been made in view of the above-described circumstances and its object is to provide a power transmission apparatus that is able to freely change transmission capacity during application of an engine brake without any change in transmission capacity during acceleration.

### SOLUTION TO PROBLEM

The object of the invention is solved by a power transmission apparatus according to claim 1.
A preferred embodiment of the invention is mentioned in claim 2.

The embodiment of claim 3 is based on the power transmission apparatus according to claim 2, wherein when the centrifugal clutch means is in operation and the back torque transmission cam is not in operation, the centrifugal clutch means and the pressure member produce a pressing force by which the driving and driven clutch plates in the first region and the second region are pressed against each other, and when the back torque transmission cam is in operation and the centrifugal clutch means is not in operation, the divider and the pressure member produce a pressing force by which the driving and driven clutch plates in the first region are pressed against each other.

The embodiment of claim 4 is based on the power transmission apparatus according to claim 3, wherein a location of the divider provided on the second clutch member is set in accordance with a transmission capacity of the driving clutch plates or the driven clutch plates disposed in the first region and a transmission capacity of the driving clutch plates or the driven clutch plates disposed in the second region.

The embodiment of claim 5 is based on the power transmission apparatus according to claim 3 or 4, wherein the number of driving clutch plates disposed in the second region is one.
Another preferred embodiment of the invention is mentioned in claim 6.

### EFFECTS OF INVENTION

According to the embodiment of claim 2, the second clutch member may include a divider dividing the driving and driven clutch plates in the axial direction such that the first region adjacent to the pressure member and the second region adjacent to the centrifugal clutch means are defined. The second clutch member presses the driving and driven clutch plates in the first region and the second region against each other during operation of the centrifugal clutch means. The second clutch member presses the driving and driven clutch plates in the first region against each other during operation of the back torque transmission cam. Consequently, this embodiment is able to freely change transmission capacity during application of an engine brake without any change in transmission capacity during acceleration.

According to the embodiment of claim 3, when the centrifugal clutch means is in operation and the back torque transmission cam is not in operation, the centrifugal clutch means and the pressure member produce a pressing force by which the driving and driven clutch plates in the first region and the second region are pressed against each other. When the back torque transmission cam is in operation and the centrifugal clutch means is not in operation, the divider and the pressure member produce a pressing force by which the driving and driven clutch plates in the first region are pressed against each other. The second clutch member includes the divider in the form of a flange located at any desired position. Consequently, this embodiment is able to freely change transmission capacity during application of an engine brake without any change in transmission capacity during acceleration.

According to the embodiment of claim 4, the location of the divider provided on the second clutch member is set in accordance with the transmission capacity of the driving clutch plates or the driven clutch plates disposed in the first region and the transmission capacity of the driving clutch plates or the driven clutch plates disposed in the second region. Consequently, this embodiment is able to accurately set transmission capacity during acceleration of the vehicle and transmission capacity during application of an engine brake.

According to the embodiment of claim 5, the number of driving clutch plates disposed in the second region is one. Consequently, this embodiment enables a smooth connection of the centrifugal clutch means to the driving clutch plates or the driven clutch plates in the first region through the driving clutch plate in the second region during operation of the centrifugal clutch means.

### BRIEF DESCRIPTION OF DRAWINGS

FIG. 1 is an external view of a power transmission apparatus according to an embodiment of the present invention.
FIG. 2 is a vertical cross-sectional view of an internal structure of the power transmission apparatus.
FIG. 3 is a partially enlarged view of the power transmission apparatus illustrated in FIG. 2.
FIG. 4 is a perspective view of a clutch housing of the power transmission apparatus.
FIG. 5 is a three-view drawing of a first clutch member of the power transmission apparatus.
FIG. 6 is a perspective view of the first clutch member.
FIG. 7 is a front perspective view of a second clutch member of the power transmission apparatus.
FIG. 8 is a rear perspective view of the second clutch member of the power transmission apparatus.
FIG. 9 provides a plan view and a rear view of the second clutch member of the power transmission apparatus.
FIG. 10 is a cross-sectional view of the second clutch member taken along the line X-X in FIG. 9.
FIG. 11 is a three-view drawing of a pressure member of the power transmission apparatus.
FIG. 12 is a cross-sectional view of the pressure member taken along the line XII-XII in FIG. 11.
FIG. 13 is a front perspective view of the pressure member.
FIG. 14 is a rear perspective view of the pressure member.
FIG. 15 is a vertical cross-sectional view of a centrifugal clutch means of the power transmission apparatus.
FIG. 16 is a partially cutaway perspective view of the centrifugal clutch means.
FIG. 17(a) is a schematic diagram illustrating how a pressing assist cam of the power transmission apparatus acts.
FIG. 17(b) is a schematic diagram illustrating how a back torque limiter cam of the power transmission apparatus acts.
FIG. 18 is a schematic diagram of a vehicle in which the power transmission apparatus is used.
FIG. 19 is a cross-sectional view illustrating a state of the power transmission apparatus where each weight member is located at a radially inner position.
FIG. 20 is a cross-sectional view illustrating a state of the power transmission apparatus where each weight member is located at an intermediate position between the radially inner position and a radially outer position.
FIG. 21 is a cross-sectional view illustrating a state of the power transmission apparatus where each weight member is located at the radially outer position.
FIG. 22 is a cross-sectional view illustrating a state of the power transmission apparatus where each weight member is located at the radially inner position and the pressure member is located at a non-operating position.
FIG. 23 is a cross-sectional view illustrating a state of the power transmission apparatus where each weight member is located at the radially outer position and the pressure member is located at the non-operating position.
FIG. 24 is a vertical cross-sectional view of a power transmission apparatus according to another embodiment of the present invention.
FIG. 25 is a three-view drawing of a second clutch member of the power transmission apparatus.

### DESCRIPTION OF EMBODIMENTS

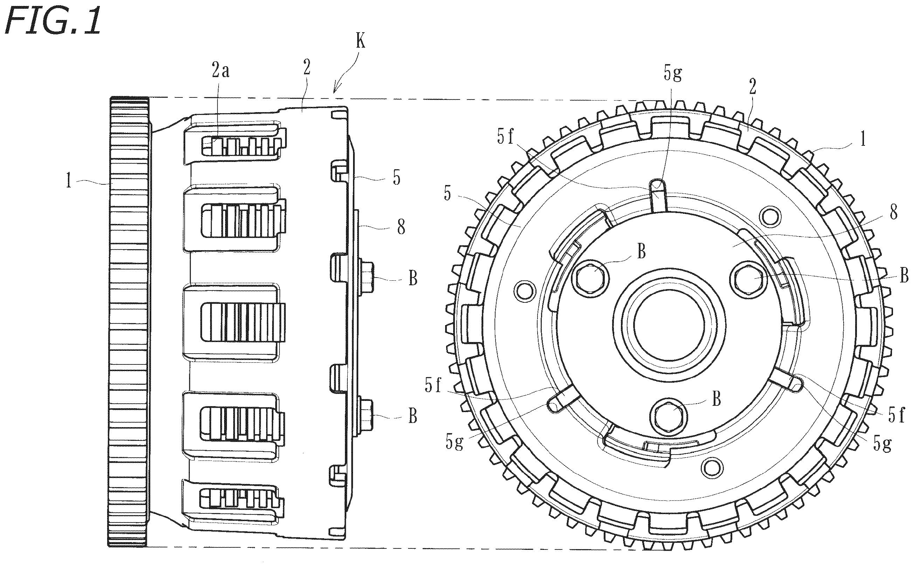

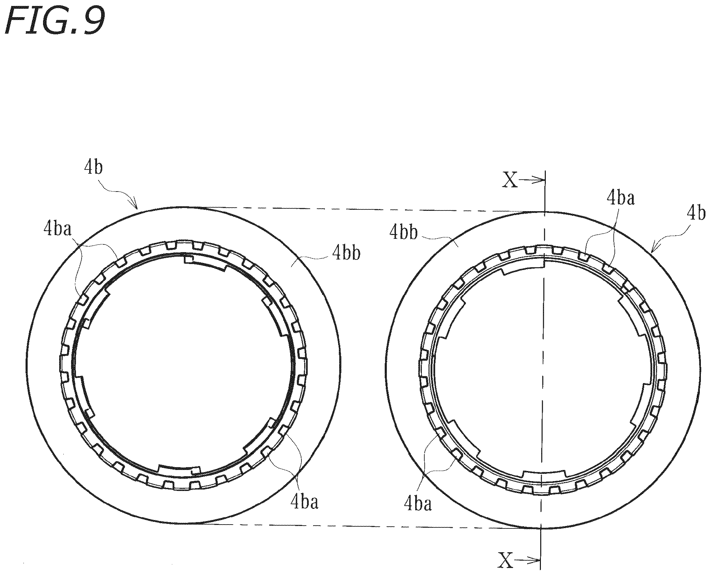

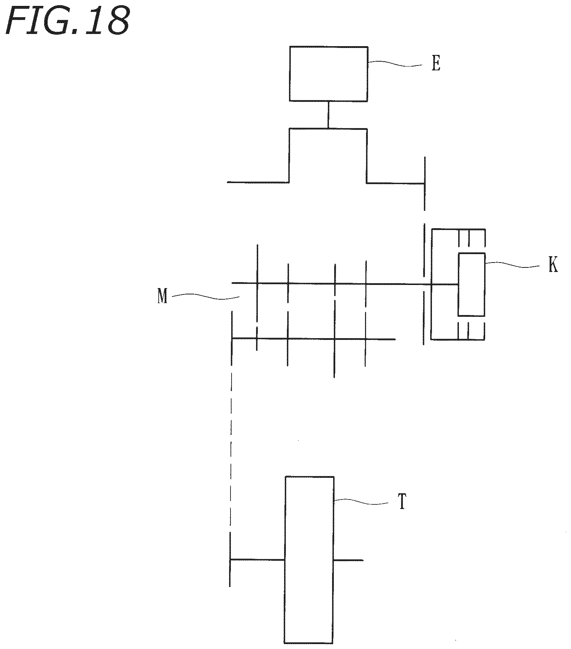

Embodiments of the present invention will be described below in detail with reference to the drawings. As illustrated in FIG. 18, a power transmission apparatus K according to the present embodiment is disposed in a vehicle so as to freely transmit a driving force of an engine E to a driving wheel T through a transmission M or cut off the driving force. As illustrated in FIGS. 1 to 16, the power transmission apparatus K includes: a clutch housing 2 provided with an input gear 1 (which is an input member) that rotates with the driving force of the engine E of the vehicle; an output shaft 3 (which is an output member) connected to the transmission M; a clutch member (which includes a first clutch member 4a and a second clutch member 4b); a pressure member 5; a plurality of driving clutch plates (6a, 6b); a plurality of driven clutch plates (7a, 7b); a centrifugal clutch means 9 including weight members 10; an auxiliary clutch plate 17; and a back torque transmission cam (which includes cam surfaces K1 and K2).

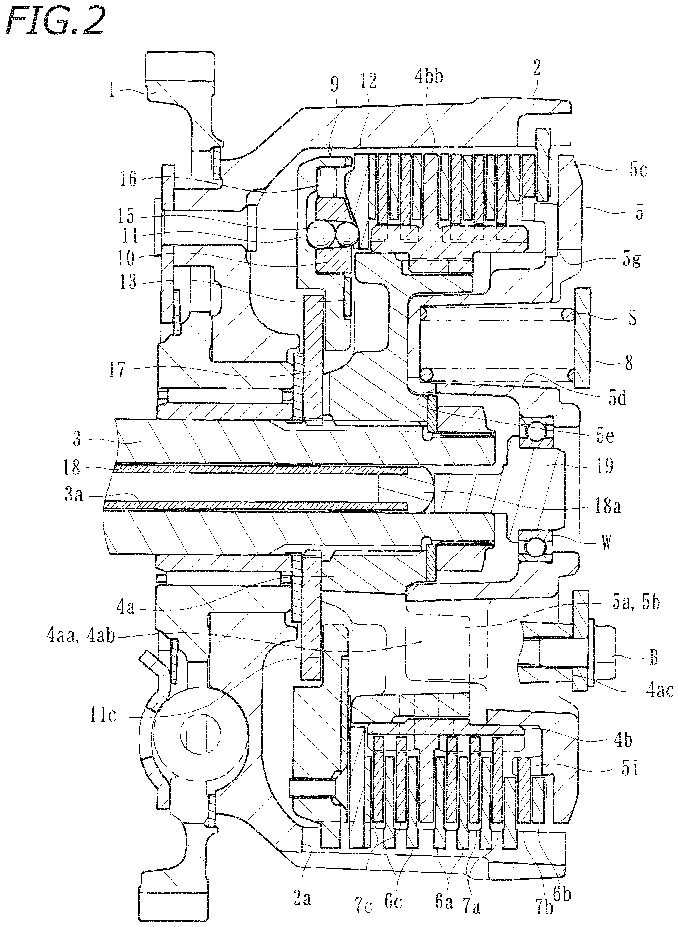

The input gear 1 is rotatable around the output shaft 3 upon receiving a driving force (or a rotational force) transmitted from the engine E. The input gear 1 is connected to the clutch housing 2 with a fastener, such as a rivet. The clutch housing 2 is a cylindrical member with an opening defined at its right end in FIG. 2 and is connected to the input gear 1. The clutch housing 2 is rotatable together with rotation of the input gear 1 with the driving force of the engine E.

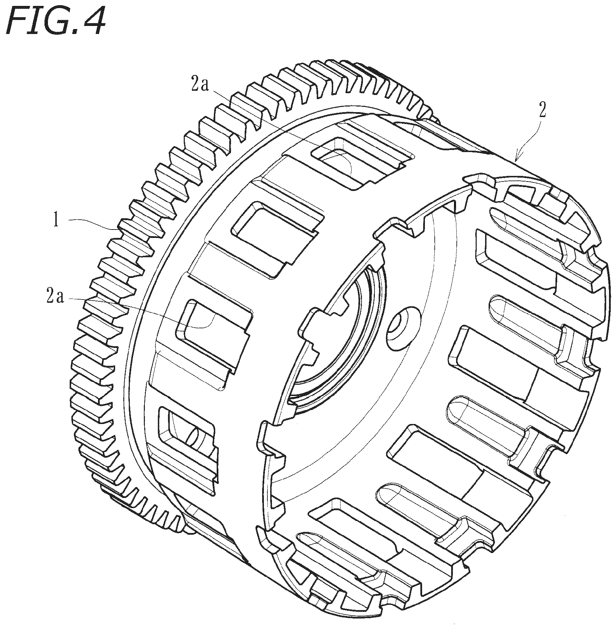

As illustrated in FIG. 4, the clutch housing 2 is circumferentially provided with a plurality of cut-outs 2a. The driving clutch plates (6a to 6c) are fitted to the cut-outs 2A and thus attached to the clutch housing 2. The driving clutch plates (6a to 6c) are each made of a substantially annular plate material. The driving clutch plates (6a to 6c) are rotatable together with rotation of the clutch housing 2 and slidable in an axial direction (which corresponds to a right-left direction in FIG. 2). The driving clutch plates 6a and 6c are attached to the clutch housing 2 so as to be adjacent to the second clutch member 4b. The driving clutch plate 6b is attached to the clutch housing 2 so as to be adjacent to the pressure member 5.

The driven clutch plates 7a and 7c are attached to the clutch member (which includes the first clutch member 4a and the second clutch member 4b). The driven clutch plates 7a and 7c are arranged alternately with the driving clutch plates 6a and 6c attached to the clutch housing 2. The clutch member is connected to the output shaft 3 (i.e., the output member), which is able to rotate the driving wheel T through the transmission M of the vehicle. The clutch member includes two components (i.e., the first clutch member 4a connected to the output member and the second clutch member 4b having the driven clutch plates 7a and 7c attached thereto) assembled to each other.

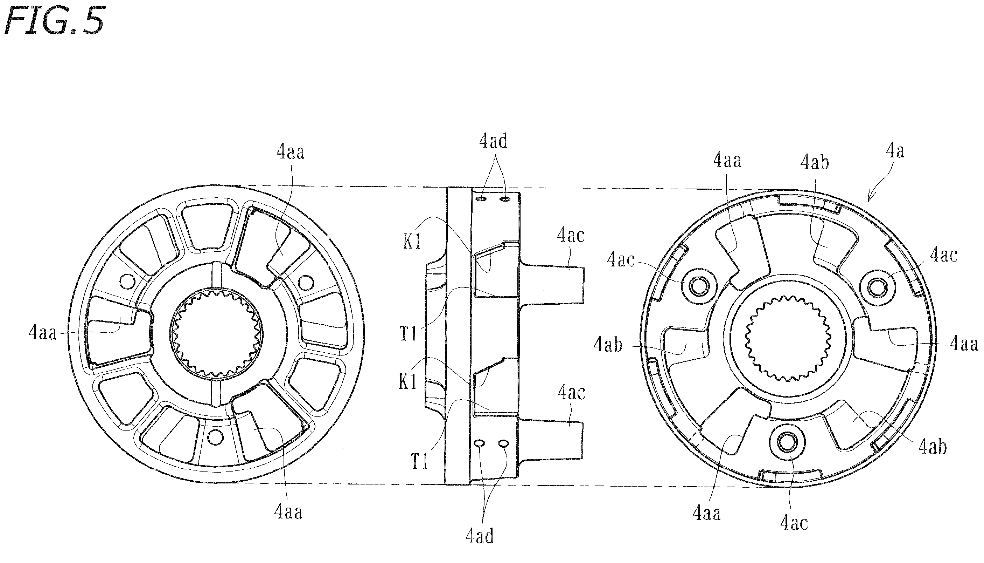

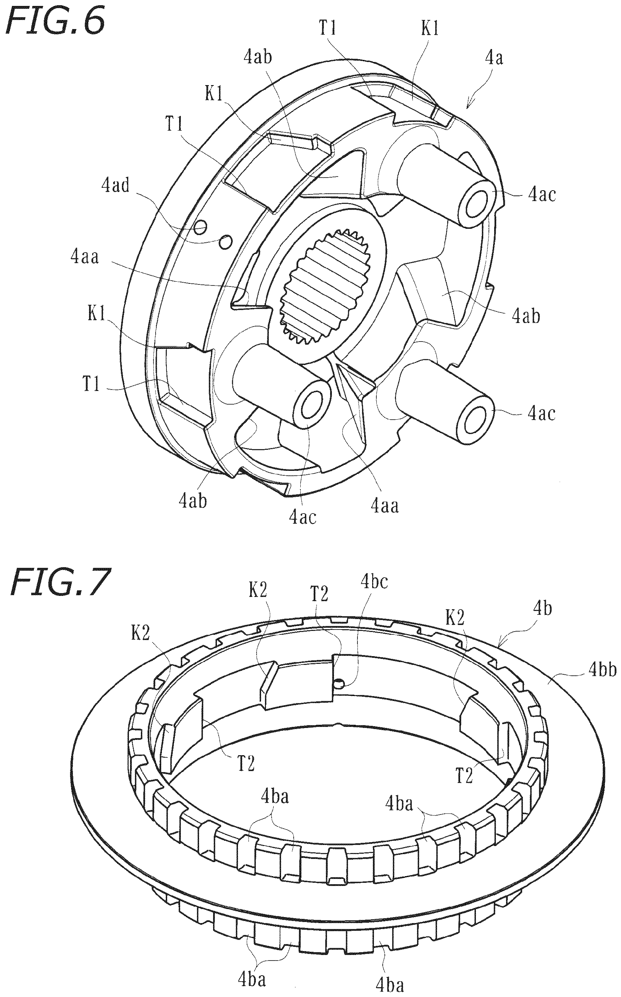

The output shaft 3 is inserted through an insertion hole (see FIGS. 5 and 6) defined in the center of the first clutch member 4a. A gear provided on the first clutch member 4a and a gear provided on the output shaft 3 are in mesh with each other so as to be connected to each other in the direction of rotation. As illustrated in FIGS. 5 and 6, the first clutch member 4a is provided with: inclined surfaces 4aa defining a pressing assist cam; and inclined surfaces 4ab defining a back torque limiter cam. The reference signs "4ac" in FIGS. 5 and 6 each indicate a boss provided with an insertion hole for a bolt B for connection between the first clutch member 4a and a securing member 8.

As illustrated in FIG. 2, the output shaft 3 inserted through the first clutch member 4a is provided with an insertion hole 3a extending in the axial direction. Oil is supplied into the clutch housing 2 through the insertion hole 3a. An operating member 18, which is a rod member, is inserted into the insertion hole 3a. An operating portion 18a is attached to an end of the operating member 18. The operating portion 18a is assembled to the operating member 18 such that the operating portion 18a is in abutment with a link member 19. The link member 19 is connected to a bearing W supporting the pressure member 5 such that the pressure member 5 is rotatable. Operating a clutch operating means (not illustrated) moves the operating member 18 rightward in FIG. 2, so that the operating portion 18a pushes the link member 19. Accordingly, the pressure member 5 is pushed rightward and is thus movable from an operating position to a non-operating position.

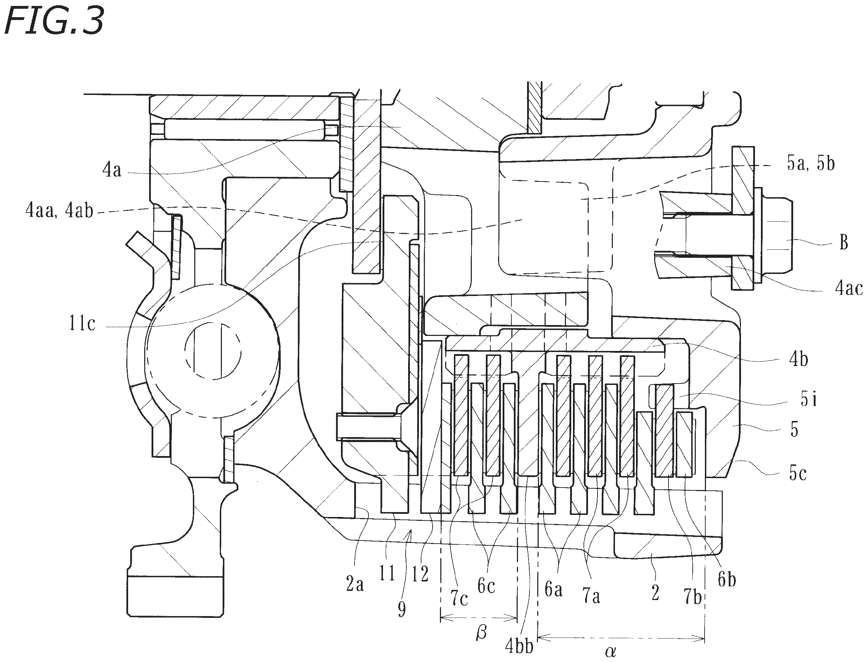

As illustrated in FIGS. 7 to 10, the second clutch member 4b is an annular member provided with a divider 4bb. The driven clutch plates 7a and 7c are spline-fitted to spline-fitting portions 4ba provided on the outer peripheral surface of the second clutch member 4b and are thus attached to the second clutch member 4b. As illustrated in FIGS. 2 and 3, the pressure member 5 is assembled to the clutch member (which includes the first clutch member 4a and the second clutch member 4b) such that the driving clutch plates (6a, 6b) and the driven clutch plates (7a, 7b) are alternately stacked and secured between a flange 5c of the pressure member 5 and the divider 4bb of the second clutch member 4b.

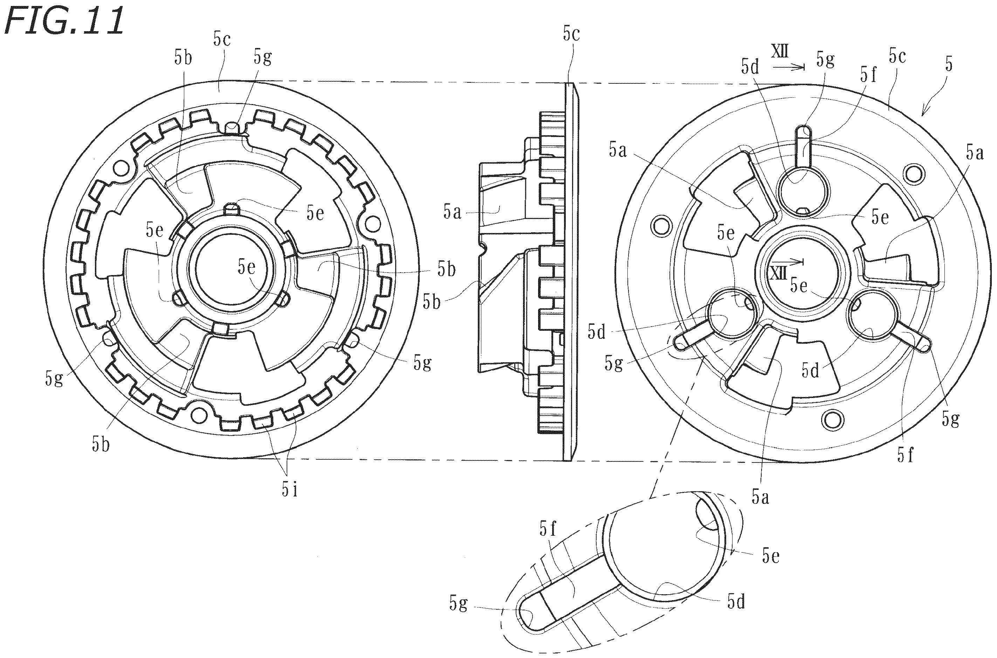

As illustrated in FIGS. 11 to 14, the pressure member 5 is a disk member provided with the flange 5c extending along the peripheral edge of the pressure member 5. The pressure member 5 is movable between: the operating position where the driving clutch plates (6a to 6c) and the driven clutch plates (7a to 7c) are pressed against each other so as to enable transmission of the driving force of the engine E to the wheel; and the non-operating position where a pressing force exerted on the driving clutch plates (6a to 6c) and the driven clutch plates (7a to 7c) is released so as to cut off transmission of the driving force of the engine E to the wheel.

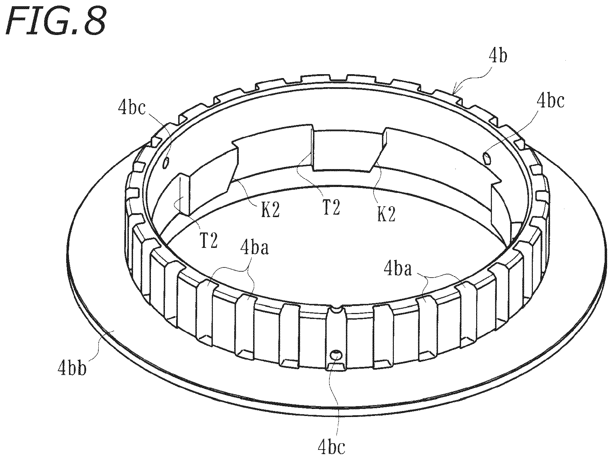

More specifically, as illustrated in FIGS. 7 and 8, the spline-fitting portions 4ba provided on the second clutch member 4b form integral projections and depressions along substantially the entire outer peripheral side surface of the second clutch member 4b while being partitioned with the divider 4bb. Fitting the driven clutch plates 7a to recessed grooves that define the spline-fitting portions 4ba restricts movement of the driven clutch plates 7a in the direction of rotation while allowing movement of the driven clutch plates 7a in the axial direction relative to the second clutch member 4b. The driven clutch plates 7a are rotatable together with the second clutch member 4b.

As illustrated in FIGS. 5 to 8, the first clutch member 4a and the second clutch member 4b according to the present embodiment are respectively provided with a plurality of oil supply holes (4ad) and a plurality of oil supply holes (4bc) through which oil is allowed to flow to the driven clutch plates 7a and 7c attached to the second clutch member 4b. Oil flowing through the insertion hole 3a is supplied to the driven clutch plates 7a and 7c through a region adjacent to an end of the output shaft 3, the oil supply holes 4ad defined in the first clutch member 4a, and the oil supply holes 4bc defined in the second clutch member 4b.

The pressure member 5 according to the present embodiment is provided with oil flow passages through which oil is allowed to flow to the driven clutch plate 7b attached to the pressure member 5. As illustrated in FIGS. 11 to 14, the oil flow passages each include an oil inlet 5e, a groove 5f, and an oil outlet 5g. The oil flow passages allow oil to flow toward the flange 5c of the pressure member 5 through housing recesses 5d in which clutch springs S are housed.

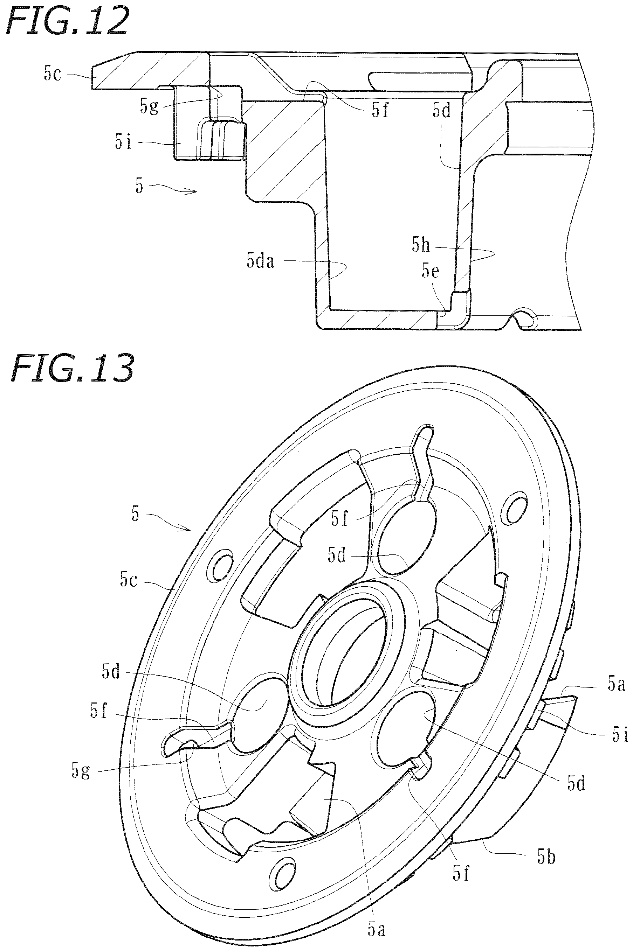

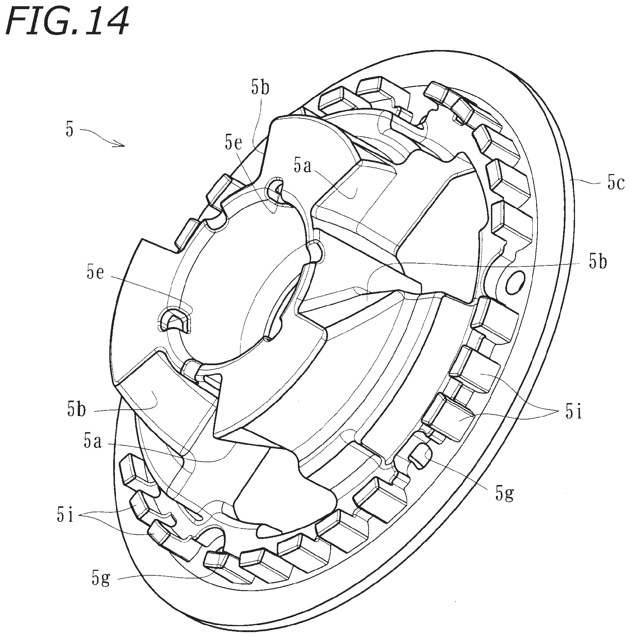

As illustrated in FIGS. 12 and 14, each oil inlet 5e is a first hole defined adjacent to the bottom of the associated housing recess 5d (i.e., defined adjacent to a portion of the associated housing recess 5d that receives an end of the associated clutch spring S). Each oil inlet 5e is in communication with the associated housing recess 5d and opens toward the center of the pressure member 5. As illustrated in FIGS. 12 and 13, each oil outlet 5g is a second hole defined adjacent to the flange 5c of the pressure member 5. Each oil outlet 5g opens toward the radially outer end of the pressure member 5.

Each groove 5f has a groove geometry defined in the surface of the pressure member 5. Each groove 5f brings the opening edge of the associated housing recess 5d into communication with the associated oil outlet 5g (i.e., the associated second hole) and thus allows oil to flow from the opening edge of the associated housing recess 5d to the associated oil outlet 5g (i.e., the associated second hole). With centrifugal force, oil supplied from the insertion hole 3a flows along a surface 5h of the pressure member 5 (which is radially inward of the housing recesses 5d), reaches the oil inlets 5e (i.e., the first holes), and then flows into the housing recesses 5d through the oil inlets 5e.

The peripheral edge of the pressure member 5 is circumferentially provided with a plurality of protrusive fitting portions 5i. The driven clutch plate 7b is fitted to the fitting portions 5i and thus attached to the pressure member 5. The driven clutch plate 7b is attached to the pressure member 5, with the driving clutch plate 6b, the driven clutch plate 7b, and an adjacent one of the driving clutch plates 6a being stacked such that a first surface of the driven clutch plate 7b is in contact with the driving clutch plate 6b and a second surface of the driven clutch plate 7b is in contact with the adjacent one of the driving clutch plates 6a. The driven clutch plate 7b is allowed to move in the axial direction relative to the pressure member 5, prevented from moving in the direction of rotation, and rotatable together with the pressure member 5.

The driven clutch plates (7a to 7c) are stacked alternately with the driving clutch plates (6a to 6c), making it possible to press adjacent ones of the clutch plates (6a to 6c, 7a to 7c) against each other or release a pressing force exerted on adjacent ones of the clutch plates (6a to 6c, 7a to 7c). The clutch plates (6a to 6c, 7a to 7c) are allowed to slide in the axial direction of the second clutch member 4b and the pressure member 5. Engaging a clutch by pressing the clutch plates (6a, 6b, 7a, 7b) against each other enables a rotational force of the clutch housing 2 to be transmitted to the output shaft 3 through the second clutch member 4b and the first clutch member 4a. Disengaging the clutch by releasing the pressing force exerted on the clutch plates (6a, 6b, 7a, 7b) causes the first clutch member 4a and the second clutch member 4b to stop following the rotation of the clutch housing 2 such that no rotational force will be transmitted to the output shaft 3.

Accordingly, a state where the driving clutch plates (6a to 6c) and the driven clutch plates (7a to 7c) are pressed against each other enables transmission of a rotational force (i.e., the driving force of the engine E), which is received by the clutch housing 2, to the driving wheel (or the transmission M) through the output shaft 3 (i.e., the output member), and a state where the driving clutch plates (6a to 6c) and the driven clutch plates (7a to 7c) are not pressed against each other makes it possible to cut off transmission of the rotational force (i.e., the driving force of the engine E), which is received by the clutch housing 2, to the output shaft 3 (i.e., the output member).

As illustrated in FIGS. 11 and 13, the pressure member 5 is circumferentially provided with the housing recesses 5d (the number of which is three in the present embodiment). The clutch springs S are each fitted into an associated one of the housing recesses 5d. As illustrated in FIG. 2, one end of each clutch spring S housed in the associated housing recess 5d is in abutment with the securing member 8, such that each clutch spring S urges the pressure member 5 in a direction in which the driving clutch plates (6a to 6c) and the driven clutch plates (7a to 7c) are to be pressed against each other.

Operating the clutch operating means (not illustrated) moves the operating member 18, which pushes the link member 19 rightward in FIG. 2. The pressure member 5 is thus pushed rightward and moved to the non-operating position, making it possible to press the driving clutch plates (6a to 6c) and the driven clutch plates (7a to 7c) against each other or stop pressing the driving clutch plates (6a to 6c) and the driven clutch plates (7a to 7c) against each other.

In the present embodiment, as illustrated in FIGS. 5, 6, 11, and 14, the first clutch member 4a is provided with the inclined surfaces 4aa and 4ab, and the pressure member 5 is provided with inclined surfaces 5a and 5b respectively facing the inclined surfaces 4aa and 4ab. Specifically, each inclined surface 4aa comes into abutment with the associated inclined surface 5a so as to provide the pressing assist cam, and each inclined surface 4ab comes into abutment with the associated inclined surface 5b so as to provide the back torque limiter cam.

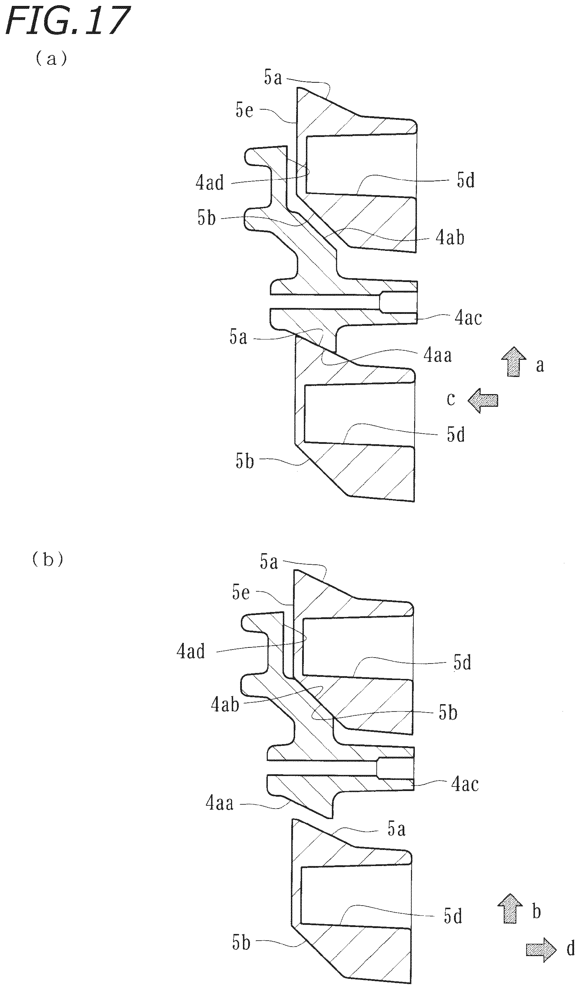

Suppose that the rotation speed of the engine E is increased and the resulting rotational force received by the input gear 1 and the clutch housing 2 is transmittable to the output shaft 3 through the first clutch member 4a and the second clutch member 4b (which means that the weight members 10 are each located at a radially outer position). In this case, as illustrated in FIG. 17(a), the rotational force is applied to the pressure member 5 in an a-direction, which exerts a force on the pressure member 5 in a c-direction in FIG. 17(a) under the action of the pressing assist cam. The pressure member 5 is thus moved in a direction in which its flange 5c comes closer to the flange 4bb of the second clutch member 4b (i.e., leftward in FIG. 2) so as to increase the pressing force exerted on the driving clutch plates (6a to 6c) and the driven clutch plates (7a to 7c).

Suppose that the rotation of the output shaft 3 exceeds the rotation speed of the input gear 1 and the clutch housing 2, resulting in a back torque. In this case, as illustrated in FIG. 17(b), a rotational force is applied to the clutch member 4 in a b-direction, which moves the pressure member 5 in a d-direction in FIG. 17(b) under the action of the back torque limiter cam so as to release the pressing force exerted on the driving clutch plates (6a to 6c) and the driven clutch plates (7a to 7c). This makes it possible to prevent a malfunction in the power transmission apparatus K or a power source (i.e., the engine E) caused by the back torque.

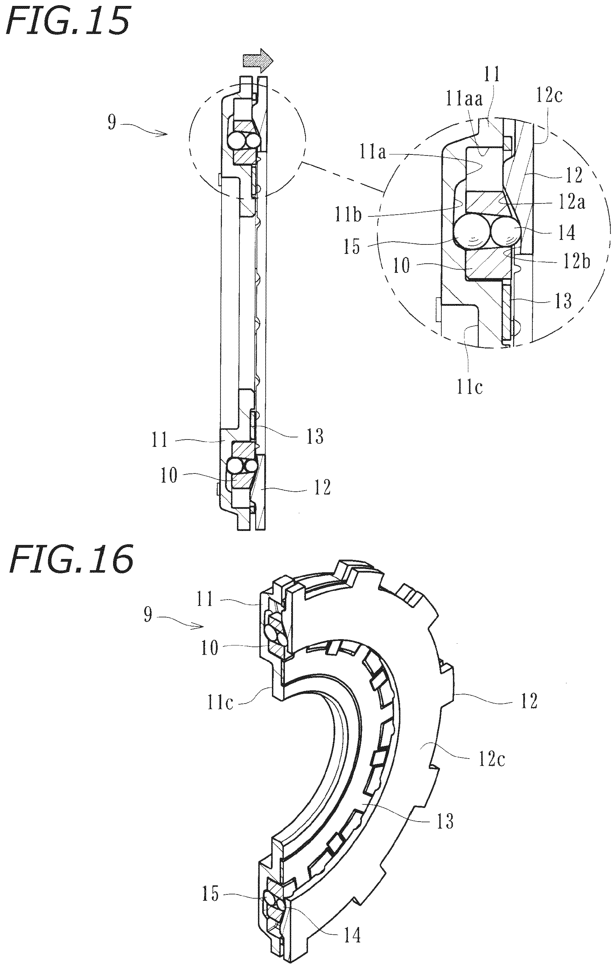

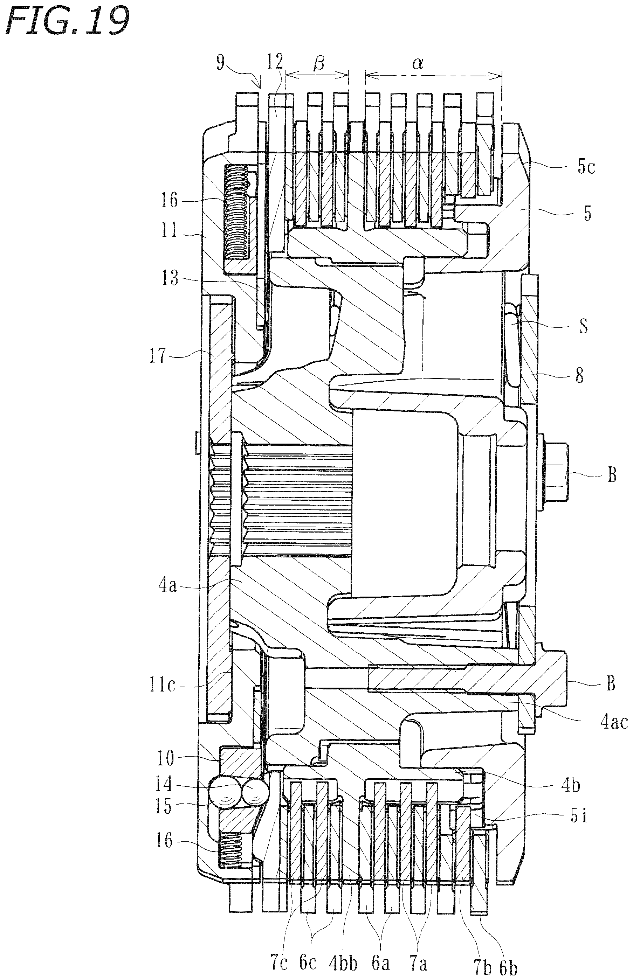

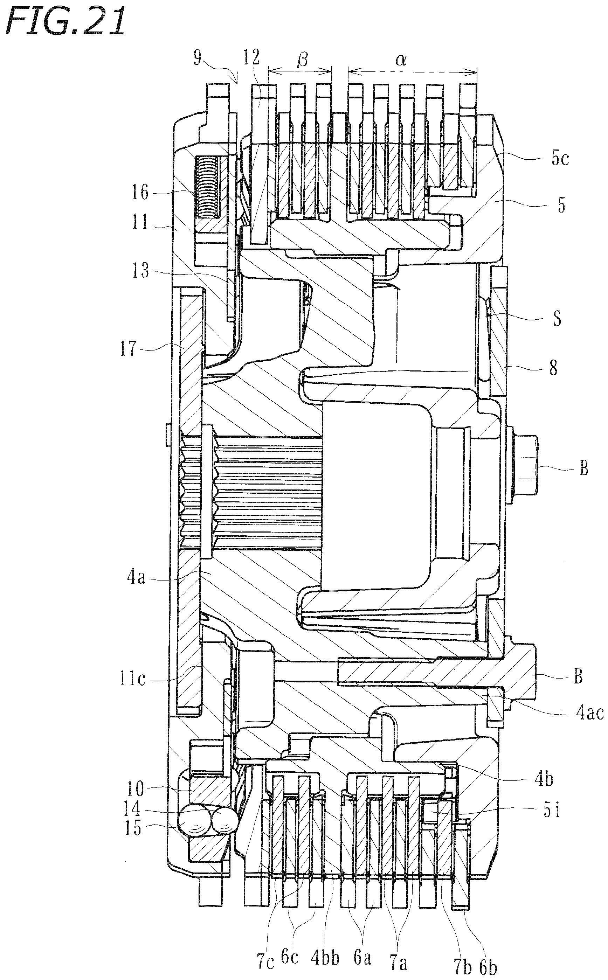

As illustrated in FIGS. 15 and 16, the centrifugal clutch means 9 includes the weight members 10 each movable from a radially inner position (see FIG. 19) to the radially outer position (see FIG. 21) with centrifugal force produced by rotation of the clutch housing 2. When the weight members 10 are each located at the radially outer position, the centrifugal clutch means 9 presses the driving clutch plates (6a to 6c) and the driven clutch plates (7a to 7c) against each other so as to enable transmission of the driving force of the engine E to the wheel (i.e., the driving wheel T). When the weight members 10 are each located at the radially inner position, the centrifugal clutch means 9 releases the pressing force exerted on the driving clutch plates (6a to 6c) and the driven clutch plates (7a to 7c) so as to cut off transmission of the driving force of the engine E to the wheel (i.e., the driving wheel T).

Specifically, the centrifugal clutch means 9 includes: the weight members 10, each of which is a substantially symmetrical polygonal member; a holding member 11 having a supporting member 13 attached thereto; a pressing member 12; first spherical members 14; second spherical members 15; and urging members 16, each of which is a coil spring. The holding member 11 and the pressing member 12 are each circumferentially provided with a plurality of protrusions. Similarly to the driving clutch plates 6, the protrusions are fitted to the cut-outs 2a of the clutch housing 2 such that the holding member 11 and the pressing member 12 are attached to the clutch housing 2. Accordingly, the holding member 11 and the pressing member 12 are each movable in the axial direction of the clutch housing 2 and in engagement with the clutch housing 2 in the direction of rotation so as to be rotatable together with the clutch housing 2.

As illustrated in FIG. 15, the weight members 10 are each housed in an associated one of housing portions 11a of the holding member 11. When no centrifugal force is applied to the weight members 10, the weight members 10 are each held at the radially inner position. Application of centrifugal force to the weight members 10 moves the weight members 10 outward against the urging force of the urging members 16 such that each weight member 10 reaches the radially outer position. The holding member 11 holds the weight members 10 such that each weight member 10 is movable between the radially inner position and the radially outer position. As illustrated in FIG. 16, the holding member 11 is an annular member. The holding member 11 includes: the housing portions 11a which are arranged in the circumferential direction of the holding member 11 and in which the weight members 10 are housed; groove geometries 11b defined in the housing portions 11a; and a pushing surface 11c.

Each housing portion 11a has a recessed shape conforming to the shape and moving range of the associated weight member 10. An outer peripheral wall surface 11aa of each housing portion 11a is allowed to abut against one end of the associated urging member 16 (see FIG. 2). The supporting member 13 is secured to a surface of the holding member 11, which is provided with the housing portions 11a. The weight members 10 are thus held between the holding member 11 and the pressing member 12, with the supporting member 13 interposed therebetween, such that the weight members 10 are movable radially.

Movement of each weight member 10 from the radially inner position to the radially outer position causes the pressing member 12 to move in a direction in which the driving clutch plates (6a to 6c) and the driven clutch plates (7a to 7c) are stacked, i.e., rightward in FIG. 2, such that the driving clutch plates (6a to 6c) and the driven clutch plates (7a to 7c) are pressed against each other. Specifically, as illustrated in FIG. 16, the pressing member 12 is an annular member. The pressing member 12 includes: inclined grooves 12a arranged in the circumferential direction of the pressing member 12; groove geometries 12b each defined adjacent to the associated inclined groove 12a; and a pushing surface 12c.

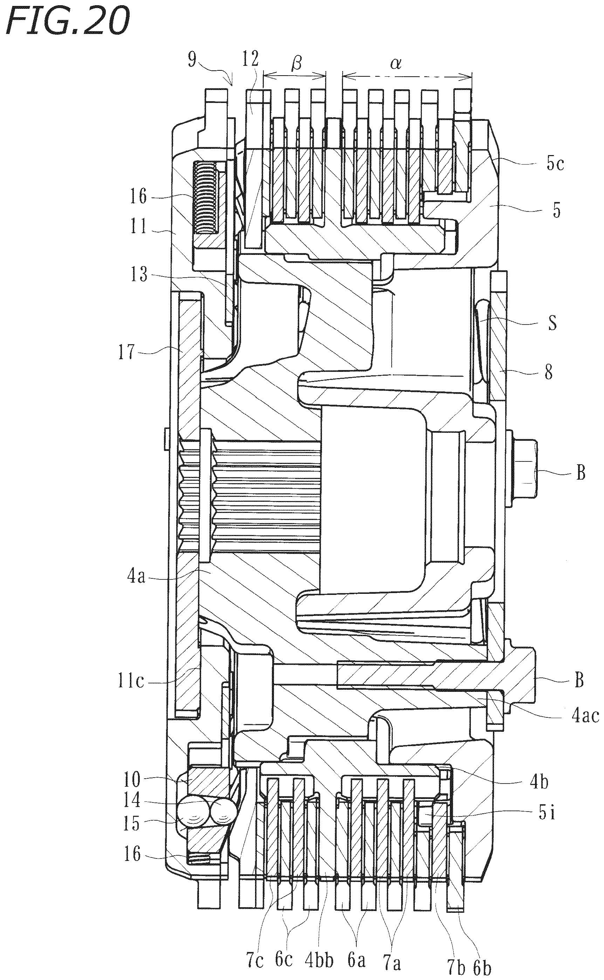

Each inclined groove 12a is defined in a portion of the pressing member 12 facing the associated weight member 10. Each inclined groove 12a is inclined upward from its inner portion to its outer portion. Thus, when the clutch housing 2 is stationary, each weight member 10 is held at the radially inner position with the urging force of the associated urging member 16 (see FIG. 19). Rotation of the clutch housing 2 applies centrifugal force to the weight members 10 so as to move the weight members 10 along the inclined grooves 12a inclined upward. This moves the pressing member 12 in a direction away from the holding member 11, i.e., in the direction in which the driving clutch plates (6a to 6c) and the driven clutch plates (7a to 7c) are to be pressed against each other (see FIGS. 20 and 21).

When the holding member 11 and the pressing member 12 are assembled to each other, with the weight members 10 interposed therebetween, each inclined groove 12a faces the associated weight member 10 as illustrated in FIGS. 15 and 16. With centrifugal force, each weight member 10 moves from the radially inner position to the radially outer position along the associated inclined groove 12a, which moves the pressing member 12 in a direction indicated by the arrow in FIG. 15 (i.e., rightward in FIG. 15). The pushing surface 12c of the pressing member 12 thus pushes the driving clutch plates (6a to 6c) and the driven clutch plates (7a to 7c) such that the driving clutch plates (6a to 6c) and the driven clutch plates (7a to 7c) are pressed against each other. The resulting reaction force moves the holding member 11 in a direction opposite to the direction indicated by the arrow in FIG. 14 (i.e., leftward in FIG. 14), so that the pushing surface 11c of the holding member 11 presses the auxiliary clutch plate 17.

Each first spherical member 14 is a steel ball attached to the associated weight member 10. Each first spherical member 14 is partially protruded from a first opening of a through hole defined in the associated weight member 10 and is in contact with a rolling contact surface of the pressing member 12 so as to be rollable thereon. Each second spherical member 15 is a steel ball attached to the associated weight member 10. Each second spherical member 15 is partially protruded from a second opening of the through hole defined in the associated weight member 10 and is in contact with a rolling contact surface of the holding member 11 so as to be rollable thereon.

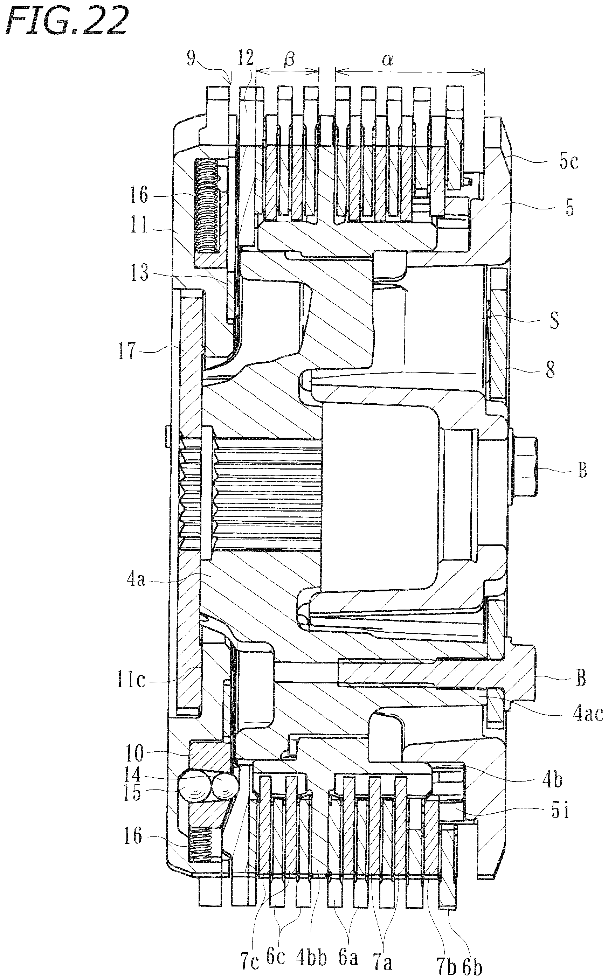

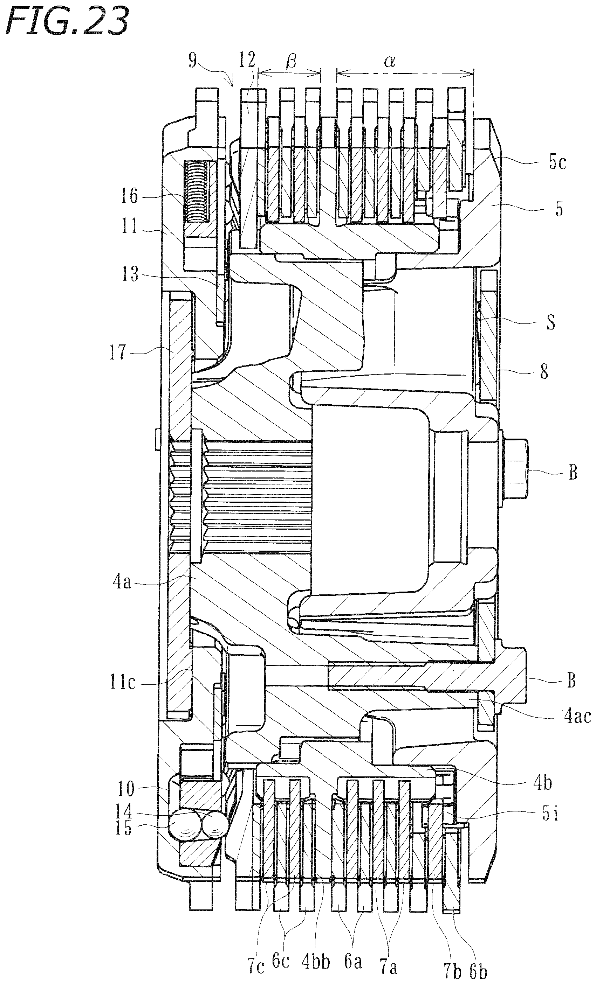

Specifically, when no centrifugal force is applied to the weight members 10, the weight members 10 are each held at the radially inner position (see FIG. 19) such that the pressing force exerted on the driving clutch plates (6a to 6c) and the driven clutch plates (7a to 7c) is released. Application of centrifugal force to the weight members 10 causes each weight member 10 to move outward as illustrated in FIG. 20 and then reach the radially outer position (see FIG. 21). This presses the driving clutch plates (6a to 6c) and the driven clutch plates (7a to 7c) against each other such that the driving force of the engine E is transmittable to the wheel T. FIG. 22 illustrates a state where each weight member 10 is located at the radially inner position and the pressure member 5 is located at the non-operating position. FIG. 23 illustrates a state where each weight member 10 is located at the radially outer position and the pressure member 5 is located at the non-operating position.

The auxiliary clutch plate 17 is disposed inside the clutch housing 2. The auxiliary clutch plate 17 is an annular member different in diameter from the driving clutch plates (6a to 6c) and the driven clutch plates (7a to 7c). In the present embodiment, the auxiliary clutch plate 17 is smaller in diameter than the driving clutch plates (6a to 6c) and the driven clutch plates (7a to 7c). As illustrated in FIG. 2, the output shaft 3 (i.e., the output member) is inserted through a central opening of the auxiliary clutch plate 17 so as to be fitted thereto. The auxiliary clutch plate 17 includes a pushed surface facing the pushing surface 11c of the holding member 11.

When the weight members 10 are each located at the radially outer position, i.e., when the driving clutch plates (6a to 6c) and the driven clutch plates (7a to 7c) are pressed against each other, the auxiliary clutch plate 17 is able to transmit the driving force of the engine E to the output shaft 3 upon being pushed by the pushing surface 11c of the holding member 11 and pressed against the pushing surface 11c. When the weight members 10 are each located at the radially inner position, i.e., when the pressing force exerted on the driving clutch plates (6a to 6c) and the driven clutch plates (7a to 7c) is released, the auxiliary clutch plate 17 is able to cut off transmission of the driving force of the engine E to the output shaft 3 upon being relieved of a pressing force applied thereto, owing to a decrease in pushing force exerted by the pushing surface 11c of the holding member 11.

Upon movement of each weight member 10 to the radially outer position, the inclined grooves 12a function as a cam so as to cause the holding member 11 and the pressing member 12 to move away from each other. Accordingly, the pushing surface 12c of the pressing member 12 presses the driving clutch plates (6a to 6c) and the driven clutch plates (7a to 7c) against each other, and the pushing surface 11c of the holding member 11 pushes the pushed surface of the auxiliary clutch plate 17 such that the pushed surface is pressed against the pushing surface 11c, resulting in transmission of the driving force of the engine E to the driving wheel T.

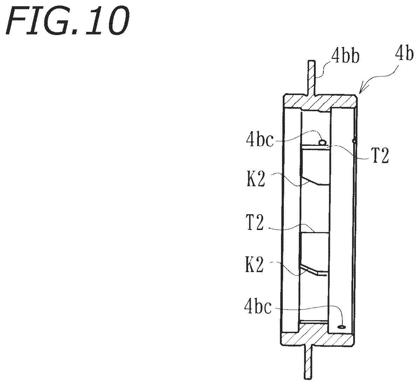

The back torque transmission cam is able to, when the pressure member 5 is located at the non-operating position, move the second clutch member 4b so as to press the driving clutch plates (6a to 6c) and the driven clutch plates (7a to 7c) against each other upon reception of a rotational force by the first clutch member 4a through the output shaft 3 (i.e., the output member). The back torque transmission cam includes: the cam surfaces K1 (see FIGS. 5 and 6) defined on the first clutch member 4a; and the cam surfaces K2 (see FIGS. 7 and 10) defined on the second clutch member 4b.

More specifically, combining the first clutch member 4a with the second clutch member 4b causes the cam surfaces K1 to face the cam surfaces K2. Upon reception of a rotational force by the first clutch member 4a through the output shaft 3 (i.e., the output member), the cam action of the cam surfaces (K1, K2) moves the second clutch member 4b toward the pressure member 5 (i.e., rightward in FIG. 2). Accordingly, during operation of the back torque transmission cam, the second clutch member 4b is movable toward the pressure member 5 upon receiving a pressing force produced by the back torque transmission cam, making it possible to press the driving clutch plates (6a, 6b) and the driven clutch plates (7a, 7b) against each other.

Combining the first clutch member 4a with the second clutch member 4b causes abutment surfaces T1 (see FIGS. 5 and 6) defined on the first clutch member 4a to face abutment surfaces T2 (see FIGS. 7, 8, and 10) defined on the second clutch member 4b. Rotation of the first clutch member 4a brings the abutment surfaces T1 into abutment with the abutment surfaces T2 such that the second clutch member 4b is rotatable in the same direction as the first clutch member 4a.

As illustrated in FIGS. 7 to 10, the second clutch member 4b according to the present embodiment includes the divider 4bb dividing the driving clutch plates (6a to 6c) and the driven clutch plates (7a to 7c) in the axial direction (which corresponds to the right-left direction in FIG. 2) such that a first region α adjacent to the pressure member 5 and a second region β adjacent to the centrifugal clutch means 9 are defined. The second clutch member 4b presses the driving clutch plates (6a to 6c) and the driven clutch plates (7a to 7c) in the first region α and the second region β against each other during operation of the centrifugal clutch means 9. The second clutch member 4b presses the driving clutch plates (6a, 6b) and the driven clutch plates (7a, 7b) in the first region α against each other during operation of the back torque transmission cam (which includes the cam surfaces K1 and K2). In other words, the second clutch member 4b does not press the driving clutch plates 6c and the driven clutch plates 7c in the second region β against each other during operation of the back torque transmission cam.

To be more specific, the divider 4bb according to the present embodiment is in the form of a flange provided on the second clutch member 4b. As illustrated in FIG. 3 and FIGS. 19 to 23, the divider 4bb divides an internal space of the clutch housing 2 into: the first region α where the driving clutch plates (6a, 6b) and the driven clutch plates (7a, 7b) are disposed (which is, in the present embodiment, a region located between the divider 4bb of the second clutch member 4b and the flange 5c of the pressure member 5); and the second region β where the driving clutch plates 6c and the driven clutch plates 7c are disposed (which is, in the present embodiment, a region located between the divider 4bb of the second clutch member 4b and the centrifugal clutch means 9).

Accordingly, when the centrifugal clutch means 9 is in operation and the back torque transmission cam is not in operation, the centrifugal clutch means 9 and the pressure member 5 produce a pressing force by which the driving clutch plates (6a to 6c) and the driven clutch plates (7a to 7c) in the first region α and the second region β are pressed against each other. When the back torque transmission cam is in operation and the centrifugal clutch means 9 is not in operation, the divider 4bb and the pressure member 5 produce a pressing force by which the driving clutch plates (6a, 6b) and the driven clutch plates (7a, 7b) in the first region α are pressed against each other.

In the present embodiment, the second clutch member 4b includes the divider 4bb dividing the driving clutch plates (6a to 6c) and the driven clutch plates (7a to 7c) in the axial direction such that the first region α adjacent to the pressure member 5 and the second region β adjacent to the centrifugal clutch means 9 are defined. The second clutch member 4b presses the driving clutch plates (6a to 6c) and the driven clutch plates (7a to 7c) in the first region α and the second region β against each other during operation of the centrifugal clutch means 9. The second clutch member 4b presses the driving clutch plates (6a, 6b) and the driven clutch plates (7a, 7b) in the first region α against each other during operation of the back torque transmission cam. Consequently, the present embodiment is able to freely change transmission capacity during application of an engine brake (i.e., transmission capacity during operation of the back torque transmission cam) without any change in transmission capacity during acceleration (i.e., transmission capacity during operation of the centrifugal clutch means 9).

In the present embodiment, when the centrifugal clutch means 9 is in operation and the back torque transmission cam is not in operation, the centrifugal clutch means 9 and the pressure member 5 produce a pressing force by which the driving clutch plates (6a to 6c) and the driven clutch plates (7a to 7c) in the first region α and the second region β are pressed against each other. When the back torque transmission cam is in operation and the centrifugal clutch means 9 is not in operation, the divider 4bb and the pressure member 5 produce a pressing force by which the driving clutch plates (6a, 6b) and the driven clutch plates (7a, 7b) in the first region α are pressed against each other. The second clutch member 4b includes the divider 4bb in the form of a flange located at any desired position. Consequently, the present embodiment is able to freely change transmission capacity during application of an engine brake without any change in transmission capacity during acceleration.

In the present embodiment, the location of the divider 4bb provided on the second clutch member 4b is set in accordance with the transmission capacity of the driving clutch plates (6a, 6b) or the driven clutch plates (7a, 7b) disposed in the first region α and the transmission capacity of the driving clutch plates 6c or the driven clutch plates 7c disposed in the second region β. As used herein, the term "transmission capacity" refers to capacity for transmission of power. Consequently, the present embodiment is able to accurately set transmission capacity during acceleration of the vehicle and transmission capacity during application of an engine brake.

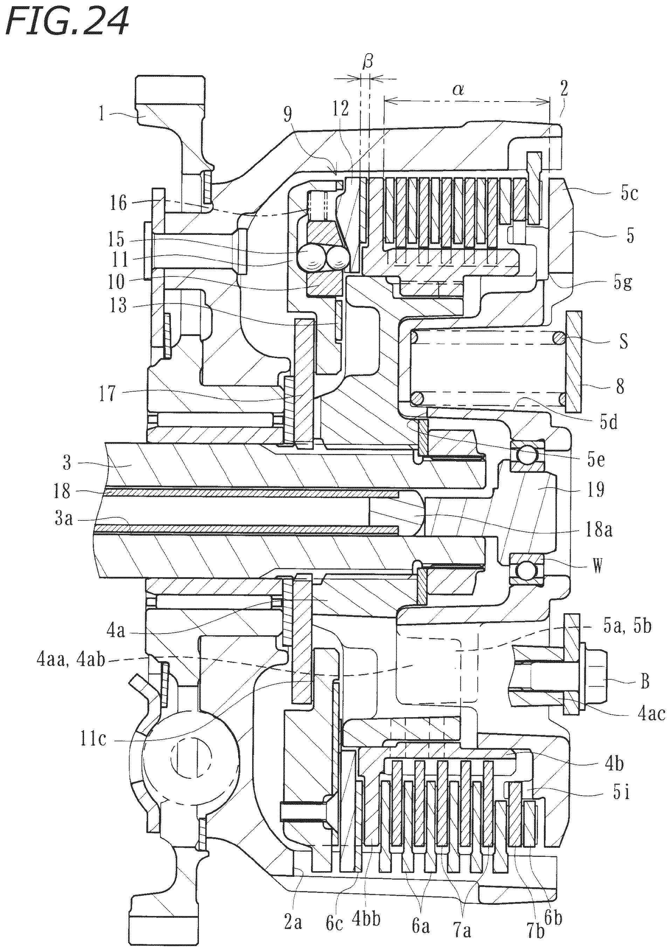

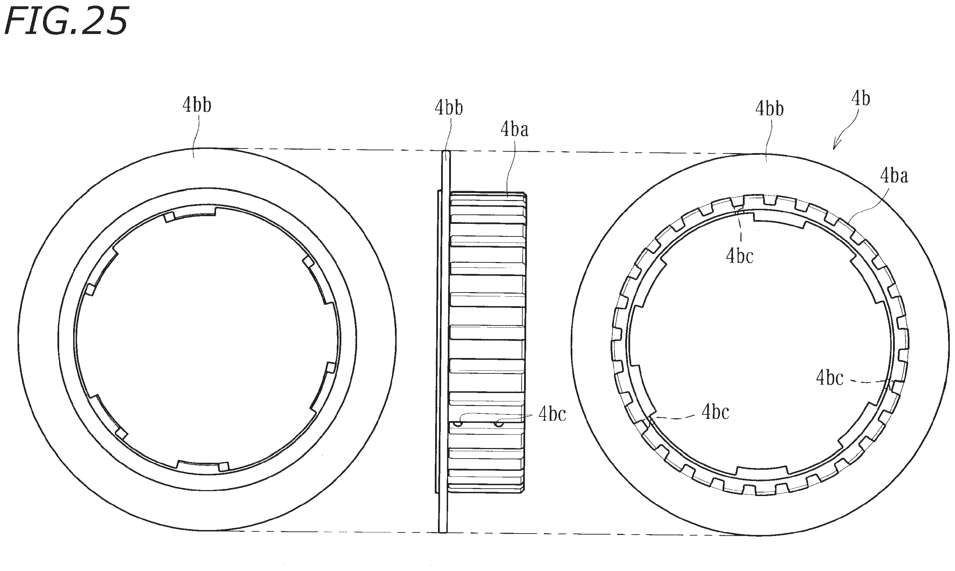

Although the present embodiment has been described thus far, the present invention is not limited to this embodiment. As illustrated in FIGS. 24 and 25, for example, the number of driving clutch plates 6c disposed in the second region β may be one. In this case, when the centrifugal clutch means 9 is in operation, the centrifugal clutch means 9 is smoothly connectable to the driving clutch plates (6a, 6b) or the driven clutch plates (7a, 7b) in the first region α through the driving clutch plate 6c in the second region β. A sudden connection of the centrifugal clutch means 9, which is attached to the clutch housing 2 (i.e., which is disposed on the input side), to the driving clutch plates (6a, 6b) and the driven clutch plates (7a, 7b), which are attached to the second clutch member 4b (i.e., which are disposed on the output side), may result in a shock. The interposition of the driving clutch plate 6c, however, enables a smooth connection of the centrifugal clutch means 9 to the driving clutch plates (6a, 6b) and the driven clutch plates (7a, 7b).

In the present embodiment, the pressure member 5 is provided with the fitting portions 5i through which the driven clutch plate 7b is attached to the pressure member 5. Alternatively, the pressure member 5 may be provided with no fitting portions 5i, and no driven clutch plate 7b may be attached to the pressure member 5 (which means that the driven clutch plates may be attached exclusively to the second clutch member 4b). In this case, the driven clutch plates 7a are disposed in the first region α, and the driven clutch plates 7c are disposed in the second region β. The power transmission apparatuses according to the present invention may find applications as various multiple-plate clutch type power transmission apparatuses for, for example, motorcycles, automobiles, three-wheel or four-wheel buggies, or general purpose machines.

### INDUSTRIAL APPLICABILITY

An inventive power transmission apparatus includes a second clutch member and may include a divider dividing driving and driven clutch plates in an axial direction such that a first region adjacent to a pressure member and a second region adjacent to a centrifugal clutch means are defined. During operation of the centrifugal clutch means, the second clutch member presses the driving and driven clutch plates in the first region and the second region against each other. During operation of a back torque transmission cam, the second clutch member presses the driving and driven clutch plates in the first region against each other. The power transmission apparatus may find applications involving, for example, change(s) in external shape or addition of other function(s).

### REFERENCE SIGNS LIST

- 1: input gear (input member)
- 2: clutch housing
- 2a: cut-out
- 3: output shaft (output member)
- 3a: oil supply hole
- 4a: first clutch member
- 4aa: inclined surface (pressing assist cam)
- 4ab: inclined surface (back torque limiter cam)
- 4ac: boss
- 4ad: oil supply hole
- 4b: second clutch member
- 4ba: spline-fitting portion
- 4bb: divider
- 4bc: oil supply hole
- 5: pressure member
- 5a: inclined surface (pressing assist cam)
- 5b: inclined surface (back torque limiter cam)
- 5c: flange
- 5d: housing recess
- 5e: oil inlet
- 5f: groove
- 5g: oil outlet
- 5h: inner peripheral surface
- 5i: fitting portion
- 6a to 6c: driving clutch plate
- 7a to 7c: driven clutch plate
- 8: securing member
- 9: centrifugal clutch means
- 10: weight member
- 11: holding member
- 11a: housing portion
- 11aa: inner peripheral wall surface
- 11b: groove geometry
- 11c: pushing surface
- 12: pressing member
- 12a: inclined groove
- 12b: groove geometry
- 12c: pushing surface
- 13: supporting member
- 14: first spherical member
- 15: second spherical member
- 16: urging member
- 17: auxiliary clutch plate
- 18: operating member
- 18a: operating portion
- 19: link member
- B: bolt
- S: clutch spring
- W: bearing
- α: first region
- β: second region
- K1: cam surface (back torque transmission cam)
- K2: cam surface (back torque transmission cam)
- T1: abutment surface
- T2: abutment surface

## Claims

1. A power transmission apparatus (K) comprising:
a clutch member housed in a clutch housing (2) that rotates together with an input member (1) that rotates with a driving force of an engine (E) of a vehicle, the clutch housing (2) having a plurality of driving clutch plates (6a, 6b, 6c) attached thereto, the clutch member including a first clutch member (4a) and a second clutch member (4b), the first clutch member (4a) being connected to an output member (3) that is able to rotate a wheel (T) of the vehicle, the second clutch member (4b) having a plurality of driven clutch plates (7a, 7c) attached thereto, the driven clutch plates (7a, 7c) being arranged alternately with the driving clutch plates (6a, 6b, 6c);
a pressure member (5) movable between an operating position where the driving and driven clutch plates (6a, 6b, 6c, 7a, 7b, 7c) are pressed against each other so as to enable transmission of the driving force of the engine (E) to the wheel (T) and a non-operating position where a pressing force exerted on the driving and driven clutch plates (6a, 6b, 6c, 7a, 7b, 7c) is released so as to cut off transmission of the driving force of the engine (E) to the wheel (T);
a centrifugal clutch means (9) including a weight member (10) movable from a radially inner position to a radially outer position with centrifugal force produced by rotation of the clutch housing (2), the centrifugal clutch means (9) being configured to, when the weight member (10) is located at the radially outer position, press the driving and driven clutch plates (6a, 6b, 6c, 7a, 7b, 7c) against each other so as to enable transmission of the driving force of the engine (E) to the wheel (T), the centrifugal clutch means (9) being configured to, when the weight member (10) is located at the radially inner position, release the pressing force exerted on the driving and driven clutch plates (6a, 6b, 6c, 7a, 7b, 7c) so as to cut off transmission of the driving force of the engine (E) to the wheel (T); and
a back torque transmission cam (K1, K2) that is able to, when the pressure member (5) is located at the non-operating position, move the second clutch member (4b) so as to press the driving and driven clutch plates (6a, 6b, 6c, 7a, 7b, 7c) against each other upon reception of a rotational force by the first clutch member (4a) through the output member (3), **characterized in that**,
the second clutch member (4b) presses all of the driving and driven clutch plates (6a, 6b, 6c, 7a, 7b, 7c) against each other during operation of the centrifugal clutch means (9) and releases a pressing force exerted on some of the driving clutch plates (6c) located between the driven clutch plates (7c) attached to the second clutch member (4b) and driven clutch plates (7c) during operation of the back torque transmission cam (K1, K2).

2. The power transmission apparatus (K) according to claim 1, wherein
the second clutch member (4b) includes a divider (4bb) dividing the driving and driven clutch plates (6a, 6b, 6c, 7a, 7b, 7c) in an axial direction of the output member (3) such that a first region (α) and a second region (β) are defined, the second clutch member (4b) being configured to press the driving and driven clutch plates (6a, 6b, 6c, 7a, 7b, 7c) in the first region (α) and the second region (β) against each other during operation of the centrifugal clutch means (9) and configured to press the driving and driven clutch plates (6a, 6b, 7a, 7b) in the first region (α) against each other and release a pressing force exerted on the driving and driven clutch plates (6c, 7c) in the second region (β) during operation of the back torque transmission cam (K1, K2).

3. The power transmission apparatus (K) according to claim 2, wherein
when the centrifugal clutch means (9) is in operation and the back torque transmission cam (K1, K2) is not in operation, the centrifugal clutch means (9) and the pressure member (5) produce a pressing force by which the driving and driven clutch plates (6a, 6b, 6c, 7a, 7b, 7c) in the first region (α) and the second region (β) are pressed against each other, and
when the back torque transmission cam (K1, K2) is in operation and the centrifugal clutch means (9) is not in operation, the divider (4bb) and the pressure member (5) produce a pressing force by which the driving and driven clutch plates (6a, 6b, 7a, 7b) in the first region (α) are pressed against each other.

4. The power transmission apparatus (K) according to claim 3, wherein
a location of the divider (4bb) provided on the second clutch member (4b) is set in accordance with a transmission capacity of the driving clutch plates(6a, 6b) or the driven clutch plates (7a, 7b) disposed in the first region (α) and a transmission capacity of the driving clutch plates (6c) or the driven clutch plates (7c) disposed in the second region (β).

5. The power transmission apparatus (K) according to claim 3 or 4, wherein
the number of driving clutch plates (6c) disposed in the second region (β) is one.

6. The power transmission apparatus (K) according to claim 2 or 3, wherein
the total number of driving and driven clutch plates (6a, 6b, 7a, 7b) disposed in the first region (α) is larger than the total number of driving and driven clutch plates (6c, 7c) disposed in the second region (β).

## Patentansprüche

1. Eine Kraftübertragungsvorrichtung (K), umfassend:
ein Kupplungselement, das in einem Kupplungsgehäuse (2) untergebracht ist, das sich zusammen mit einem Antriebselement (1) dreht, das sich mit einer Antriebskraft eines Motors (E) eines Fahrzeugs dreht, wobei das Kupplungsgehäuse (2) eine Vielzahl von daran angebrachten Antriebskupplungsscheiben (6a, 6b, 6c) aufweist, wobei das Kupplungselement ein erstes Kupplungselement (4a) und ein zweites Kupplungselement (4b) umfasst, wobei das erste Kupplungselement (4a) mit einem Abtriebselement (3) verbunden ist, das ein Rad (T) des Fahrzeugs drehen kann, wobei das zweite Kupplungselement (4b) eine Vielzahl von daran angebrachten angetriebenen Kupplungsscheiben (7a, 7c) aufweist, wobei die angetriebenen Kupplungsscheiben (7a, 7c) abwechselnd mit den antreibenden Kupplungsscheiben (6a, 6b, 6c) angeordnet sind;
ein Druckelement (5), das zwischen einer Betriebsposition, in der die treibenden und angetriebenen Kupplungsscheiben (6a, 6b, 6c, 7a, 7b, 7c) gegeneinander gedrückt werden, um die Übertragung der Antriebskraft des Motors (E) auf das Rad (T) zu ermöglichen und eine Ruheposition, in der eine auf die treibenden und angetriebenen Kupplungsscheiben (6a, 6b, 6c, 7a, 7b, 7c) ausgeübte Druckkraft gelöst wird, um die Übertragung der Antriebskraft des Motors (E) auf das Rad (T) zu unterbrechen;
eine Fliehkraftkupplungseinrichtung (9) mit einem Gewichtselement (10), das durch die Rotation des Kupplungsgehäuses (2) erzeugte Fliehkraft von einer radial inneren Position zu einer radial äußeren Position bewegbar ist, wobei die Fliehkraftkupplungseinrichtung (9) so konfiguriert ist, dass sie, wenn sich das Gewichtselement (10) in der radial äußeren Position befindet, die treibenden und angetriebenen Kupplungsscheiben (6a, 6b, 6c, 7a, 7b, 7c) gegeneinander zu drücken, um die Übertragung der Antriebskraft des Motors (E) auf das Rad (T) zu ermöglichen, wobei die Fliehkraftkupplungseinrichtung (9) so konfiguriert ist, dass sie, wenn sich das Gewichtselement (10) an der radial inneren Position befindet, die auf die treibende und die getriebene Kupplungsscheibe (6a, 6b, 6c, 7a, 7b, 7c) ausgeübte Druckkraft freigibt, um die Übertragung der Antriebskraft des Motors (E) auf das Rad (T) zu unterbrechen; und
eine Rückdrehmomentübertragungsnocke (K1, K2), die in der Lage ist, das zweite Kupplungselement (4b) zu bewegen, um die treibenden und angetriebenen Kupplungsscheiben (6a, 6b, 6c, 7a, 7b, 7c) gegeneinander zu drücken, wenn das Druckelement (5) sich in der Ruheposition befindet und das erste Kupplungselement (4a) über das Abtriebselement (3) eine Drehkraft empfängt,
**dadurch gekennzeichnet, dass**
das zweite Kupplungselement (4b) alle treibenden und getriebenen Kupplungsscheiben (6a, 6b, 6c, 7a, 7b, 7c) während des Betriebs der Fliehkraftkupplungseinrichtung (9) gegeneinander drückt und eine Druckkraft, die auf einige der treibenden Kupplungsscheiben (6c) ausgeübt wird, die sich zwischen den angetriebenen Kupplungsscheiben (7c), die an dem zweiten Kupplungselement (4b) angebracht sind, und den angetriebenen Kupplungsscheiben (7c) befinden, während des Betriebs des Rückdrehmomentübertragungsnockens (K1, K2).

2. Die Kraftübertragungsvorrichtung (K) gemäß Anspruch 1, wobei
das zweite Kupplungselement (4b) einen Teiler (4bb) umfasst, der die treibenden und angetriebenen Kupplungsscheiben (6a, 6b, 6c, 7a, 7b, 7c) in einer axialen Richtung des Abtriebselements (3) so teilt, dass ein erster Bereich (α) und ein zweiter Bereich (β) definiert werden , wobei das zweite Kupplungselement (4b) so konfiguriert ist, dass es die treibende und die getriebene Kupplungsscheibe (6a, 6b, 6c, 7a, 7b, 7c) im ersten Bereich (α) und im zweiten Bereich (β) während des Betriebs der Fliehkraftkupplungseinrichtung (9) gegeneinander drückt, und so konfiguriert ist, dass es die treibenden und angetriebenen Kupplungsscheiben (6a, 6b, 7a, 7b) in dem ersten Bereich (α) gegeneinander zu drücken und eine auf die treibenden und angetriebenen Kupplungsscheiben (6c, 7c) in dem zweiten Bereich (β) ausgeübte Druckkraft während des Betriebs des Rückdrehmomentübertragungsnockens (K1, K2) zu lösen.

3. Die Kraftübertragungsvorrichtung (K) gemäß Anspruch 2, wobei
wenn Fliehkraftkupplungseinrichtung (9) in Betrieb ist und der Rückdrehmomentübertragungsnocken (K1, K2) nicht in Betrieb ist,
die Fliehkraftkupplungseinrichtung (9) und das Druckelement (5) eine Druckkraft erzeugen, durch die die treibenden und getriebenen Kupplungsscheiben (6a, 6b, 6c, 7a, 7b, 7c) im ersten Bereich (α) und im zweiten Bereich (β) gegeneinander gedrückt werden, und
wenn der hintere Drehmomentübertragungsnocken (K1, K2) in Betrieb ist und die Fliehkraftkupplungseinrichtung (9) nicht in Betrieb ist, erzeugen der Teiler (4bb) und das Druckelement (5) eine Druckkraft, durch die die treibenden und angetriebenen Kupplungsscheiben (6a, 6b, 7a, 7b) im ersten Bereich (α) gegeneinander gedrückt werden.

4. Die Kraftübertragungsvorrichtung (K) nach Anspruch 3, wobei
eine Position des Teilers (4bb), der an dem zweiten Kupplungselement (4b) vorgesehen ist, in Übereinstimmung mit einer Übertragungskapazität der antreibenden Kupplungsplatten (6a, 6b) oder der angetriebenen Kupplungsplatten (7a, 7b), die in dem ersten Bereich (α) angeordnet sind, und einer Übertragungskapazität der antreibenden Kupplungsplatten (6c) oder der angetriebenen Kupplungsplatten (7c), die in dem zweiten Bereich (β) angeordnet sind, eingestellt ist.

5. Die Kraftübertragungsvorrichtung (K) gemäß Anspruch 3 oder 4, wobei
die Anzahl der im zweiten Bereich (β) angeordneten Antriebskupplungsscheiben (6c) eins beträgt.

6. Die Kraftübertragungsvorrichtung (K) gemäß Anspruch 2 oder 3, wobei
die Gesamtzahl der im ersten Bereich (α) angeordneten treibenden und getriebenen Kupplungsscheiben (6a, 6b, 7a, 7b) größer ist als die Gesamtzahl der im zweiten Bereich (β) angeordneten treibenden und getriebenen Kupplungsscheiben (6c, 7c).

## Revendications

1. Appareil de transmission de puissance (K) comprenant :
un élément d'embrayage logé dans un carter d'embrayage (2) qui tourne conjointement à un élément d'entrée (1) tournant avec une force d'entraînement d'un moteur (E) d'un véhicule, une pluralité de disques d'embrayage d'entraînement (6a, 6b, 6c) étant fixés au carter d'embrayage (2), l'élément d'embrayage comprenant un premier élément d'embrayage (4a) et un deuxième élément d'embrayage (4b), le premier élément d'embrayage (4a) étant connecté à un élément de sortie (3) qui est capable de faire tourner une roue (T) du véhicule, une pluralité de disques d'embrayage entraînés (7a, 7c) étant fixés au deuxième élément d'embrayage (4b), les disques d'embrayage entraînés (7a, 7c) étant agencés en alternance avec les disques d'embrayage d'entraînement (6a, 6b, 6c) ;
un élément de pression (5) mobile entre une position de fonctionnement où les disques d'embrayage d'entraînement et entraînés (6a, 6b, 6c, 7a, 7b, 7c) sont pressés les uns contre les autres de manière à permettre la transmission de la force d'entraînement du moteur (E) à la roue (T) et une position de non-fonctionnement où une force de pression exercée sur les disques d'embrayage d'entraînement et entraînés (6a, 6b, 6c, 7a, 7b, 7c) est libérée de manière à interrompre la transmission de la force d'entraînement du moteur (E) à la roue (T) ;
un moyen d'embrayage centrifuge (9) comprenant une masselotte (10) mobile d'une position radialement interne à une position radialement externe avec une force centrifuge produite par une rotation du carter d'embrayage (2), le moyen d'embrayage centrifuge (9) étant configuré pour, quand la masselotte (10) est située dans la position radialement externe, presser les disques d'embrayage d'entraînement et entraînés (6a, 6b, 6c, 7a, 7b, 7c) les uns contre les autres de manière à permettre la transmission de la force d'entraînement du moteur (E) à la roue (T), le moyen d'embrayage centrifuge (9) étant configuré pour, quand la masselotte (10) est située dans la position radialement interne, libérer la force de pression exercée sur les disques d'embrayage d'entraînement et entraînés (6a, 6b, 6c, 7a, 7b, 7c) de manière à interrompre la transmission de la force d'entraînement du moteur (E) à la roue (T) ; et
une came de transmission de contre-couple (K1, K2) qui est capable, quand l'élément de pression (5) est situé dans la position de non-fonctionnement, de déplacer le deuxième élément d'embrayage (4b) de manière à presser les disques d'embrayage d'entraînement et entraînés (6a, 6b, 6c, 7a, 7b, 7c) les uns contre les autres lors de la réception d'une force de rotation par le premier élément d'embrayage (4a) via l'élément de sortie (3),
**caractérisé en ce que** le deuxième élément d'embrayage (4b) presse tous les disques d'embrayage d'entraînement et entraînés (6a, 6b, 6c, 7a, 7b, 7c) les uns contre les autres pendant le fonctionnement du moyen d'embrayage centrifuge (9) et libère une force de pression exercée sur certains des disques d'embrayage d'entraînement (6c) situés entre les disques d'embrayage entraînés (7c) fixés au deuxième élément d'embrayage (4b) et les disques d'embrayage entraînés (7c) pendant le fonctionnement de la came de transmission de contre-couple (K1, K2).

2. Appareil de transmission de puissance (K) selon la revendication 1, dans lequel
le deuxième élément d'embrayage (4b) comprend un diviseur (4bb) qui divise les disques d'embrayage d'entraînement et entraînés (6a, 6b, 6c, 7a, 7b, 7c) dans une direction axiale de l'élément de sortie (3) de telle sorte qu'une première région (α) et une deuxième région (β) sont définies, le deuxième élément d'embrayage (4b) étant configuré pour presser les disques d'embrayage d'entraînement et entraînés (6a, 6b, 6c, 7a, 7b, 7c) dans la première région (α) et la deuxième région (β) les uns contre les autres pendant le fonctionnement du moyen d'embrayage centrifuge (9) et configuré pour presser les disques d'embrayage d'entraînement et entraînés (6a, 6b, 7a, 7b) dans la première région (α) les uns contre les autres et pour libérer une force de pression exercée sur les disques d'embrayage d'entraînement et entraînés (6c, 7c) dans la deuxième région (β) pendant le fonctionnement de la came de transmission de contre-couple (K1, K2).

3. Appareil de transmission de puissance (K) selon la revendication 2, dans lequel
quand le moyen d'embrayage centrifuge (9) est en fonctionnement et que la came de transmission de contre-couple (K1, K2) n'est pas en fonctionnement, le moyen d'embrayage centrifuge (9) et l'élément de pression (5) produisent une force de pression par laquelle les disques d'embrayage d'entraînement et entraînés (6a, 6b, 6c, 7a, 7b, 7c) dans la première région (α) et la deuxième région (β) sont pressés les uns contre les autres, et
quand la came de transmission de contre-couple (K1, K2) est en fonctionnement et que le moyen d'embrayage centrifuge (9) n'est pas en fonctionnement, le diviseur (4bb) et l'élément de pression (5) produisent une force de pression par laquelle les disques d'embrayage d'entraînement et entraînés (6a, 6b, 7a, 7b) dans la première région (α) sont pressés les uns contre les autres.

4. Appareil de transmission de puissance (K) selon la revendication 3, dans lequel
un emplacement du diviseur (4bb) pourvu sur le deuxième élément d'embrayage (4b) est défini conformément à une capacité de transmission des disques d'embrayage d'entraînement (6a, 6b) ou des disques d'embrayage entraînés (7a, 7b) disposés dans la première région (α) et à une capacité de transmission des disques d'embrayage d'entraînement (6c) ou des disques d'embrayage entraînés (7c) disposés dans la deuxième région (β).

5. Appareil de transmission de puissance (K) selon la revendication 3 ou 4, dans lequel
le nombre de disques d'embrayage d'entraînement (6c) disposés dans la deuxième région (β) est de un.

6. Appareil de transmission de puissance (K) selon la revendication 2 ou 3, dans lequel
le nombre total de disques d'embrayage d'entraînement et entraînés (6a, 6b, 7a, 7b) disposés dans la première région (α) est supérieur au nombre total de disques d'embrayage d'entraînement et entraînés (6c, 7c) disposés dans la deuxième région (β).
